# EUROPÄISCHE PATENTANMELDUNG

(11) **EP 2 295 272 A1**
(43) Veröffentlichungstag der Anmeldung: **16.03.2011**
(21) Anmeldenummer: 10008967.1
(22) Anmeldetag: 28.08.2010
(51) Int. Cl.: B60J 1/18

(54) **Heckscheibe für ein Faltverdeck**

(30) Priorität: 08.09.2009 DE 102009040567
(71) Anmelder: Magna Car Top Systems GmbH, 74321 Bietigheim-Bissingen (DE)
(72) Erfinder: Brod, Sabine, 74427 Fichtenberg (DE); Mangold, Artur, Dipl.-Ing., 72172 Sulz (DE); Vogt, Dirk, Dipl.-Ing., 70619 Stuttgart (DE)

(57) **Zusammenfassung**

Diese Heckscheibe ist für ein Faltverdeck eines Personenkraftwagens konzipiert, das in einen Aufbau integriert ist und zwischen einer einen Fahrgastraum überspannenden Schließstellung und einer in einem Aufnahmeraum des Aufbaus abgelegten Offenstellung bewegbar ist, wobei die quer zur Fahrzeuglängsrichtung verlaufende, in ein Heckscheibengehäuse versenkbare Heckscheibe einerseits dem Fahrgastraum und andererseits einem rückwärtigen Deckel z.B. für den Aufnahmeraum zugekehrt ist.

Um dieses Faltverdeck zu optimieren, trägt das Heckscheibengehäuse in einem -in Fahrzeughöhenrichtung gesehen- oberen Bereich einen ersten Dichtkörper und einen zweiten Dichtkörper, die mit einer Innenseite und einer Außenseite der Heckscheibe zusammenwirken, welcher erste Dichtkörper sich an einem Querelement im Fahrgastraum und der zweite Dichtkörper sich an einer benachbart der Heckscheibe erstreckenden Randzone des Deckels abstützen.

## Beschreibung

Die Erfindung bezieht sich auf eine Heckscheibe für ein Faltverdeck eines Personenkraftwagens, nach dem Oberbegriff des Patentanspruchs 1.

Es ist ein Cabriolet-Fahrzeug mit seitlichen Finnen bekannt, DE 10 2006 007 361 A1, die zur Einstellung einer Vollcabriolet-Stellung in die Fahrzeugkarosserie absenkbar sind. Zwischen den beiden Finnen erstreckt sich -in Fahrzeugquerrichtung geseheneine aufrechte Heckscheibe, die in einem Heckscheibengehäuse in Fahrzeughöhenrichtung beweglich ausgeführt ist. Das Heckscheibengehäuse weist Kastenform auf, und die Heckscheibe begrenzt auf der einen Seite einen Fahrgastraum und ist mit einer anderen Seite an eine Abdeckung angeschlossen.

Aus der DE 10 2006 008 086 A1 geht eine Heckscheibenanordnung hervor, die zwischen -finnenartigen- C-Säulen verläuft. Die Heckscheibe selbst ist aus einer oberen Stellung in eine abgesenkte Stellung bewegbar. In der abgesenkten Stellung ist die Heckscheibe in eine Aufnahmekassette eingefahren. Die Aufnahmekassette ist von einer Verstaulage in eine Aufnahmelage bewegbar, und zwar unter Vermittlung eines Hebelwerks.

In der DE 101 40 433 A1 wird ein Verdeck für ein Kraftfahrzeug behandelt, das einen einen Verdeckbezug stützenden Eckspriegel umfasst, an dem eine Heckscheibe anliegt. Von der Heckscheibe weggeführt ist ein U-profilartiger Rahmen, dessen freier Schenkel einen Dichtkörper trägt. Der Dichtkörper wirkt mit einer Innenseite einer Wand des Eckspriegels dichtend zusammen.

Es ist Aufgabe der Erfindung, eine Heckscheibe für ein Faltverdeck eines Personenkraftwagens zu konzipieren, die gezielt in ein Heckscheibengehäuse bewegbar ist und gegenüber einem benachbarten Fahrgastraum und einem Aufnahmeraum funktionsgerecht abgeschottet ist.

Nach der Erfindung wird diese Aufgabe durch die Merkmale des Patentanspruchs 1 gelöst. Weitere, die Erfindung ausgestaltende Merkmale sind in den Unteransprüchen enthalten.

Die mit der Erfindung hautsächlich erzielten Vorteile sind darin zu sehen, dass der erste Dichtkörper, der zweite Dichtkörper und der dritte Dichtkörper, angebracht am Heckscheibengehäuse, ein wirkungsvolles Dichtungssystem bilden, um einem Eintritt von Wasser in den angrenzenden Fahrgastraum bzw. Aufnahmeraum entgegenzuwirken. Die Dichtkörper sind aufwandsarm mit dem Heckscheibengehäuse verbunden, da sie mit U-förmigen Halteabschnitten parallel zur Heckscheibe sich erstreckende Stehflansche des besagten Heckscheibengehäuses umgreifen. Die Dichtlippen des ersten Dichtkörpers arbeiten vorbildlich mit der Heckscheibe und der Innenseite des Querelements im Fahrgastraum zusammen. Sinngemäß trifft dies auch für die Dichtlippe des zweiten Dichtkörpers zu, der noch zusätzlich mit einer musterhaften ersten Schlauchdichtungsvorrichtung auf die Innenseite des Deckels einwirkt. Eine zweite Schlauchdichtungsvorrichtung mit vergleichbaren Eigenschaften ist am dritten Dichtkörper vorgesehen. Das vor allem durch die Dichtlippen des ersten und des zweiten Dichtkörpers abgehaltene flüssige Medium lässt sich über an den Längsseiten der Heckscheibe bspw. durch mit den besagten Dichtkörpern vereinigte Wasserführelemente ableiten. Schließlich ist das Heckscheibengehäuse mit der vorderen und der hinteren Schale leicht realisierbar und darüber hinaus eignet sich diese Schale gut für die bauliche Integration der Stehflansche für die Dichtkörper.

In der Zeichnung wird ein Ausführungsbeispiel der Erfindung gezeigt, das nachstehend näher erläutert wird.

Es zeigen
Fig. 1 eine Schrägansicht von hinten links oben auf einen Personenkraftwagen mit einer Heckscheibe eines Faltverdecks,
Fig. 2 einen Schnitt nach der II-II der Fig. 1 in größerem Maßstab,
Fig. 3 eine Einzelheit X der Fig. 1 in größerem Maßstab,

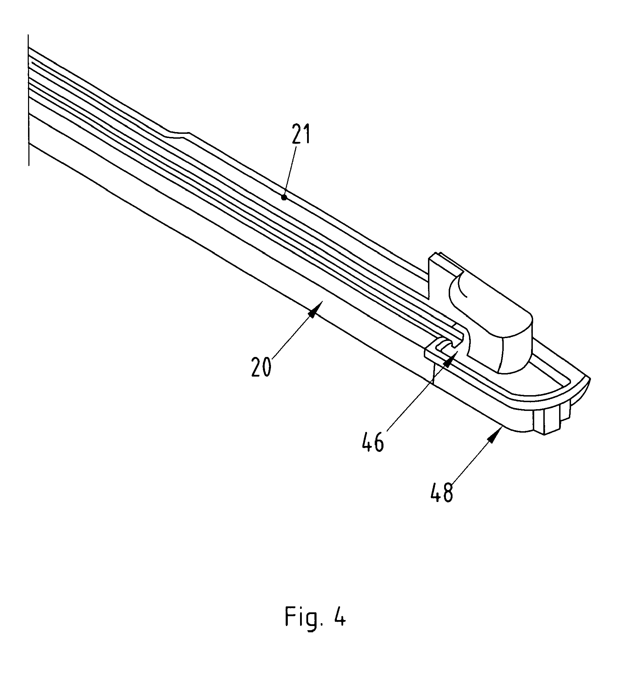

Fig. 4 eine schematische Teilschrägansicht eines Heckscheibengehäuses von vorne links oben mit einem vorderen Dichtkörper und einem Wasserführelement.

Ein Personenkraftwagen 1 umfasst einen von Rädern 2 und 3 getragenen Aufbau 4, der einen Grundkörper 5 und ein Faltverdeck 6 mit Verdeckgestänge und Verdeckbezug -beide werden nicht gezeigt- aufweist. Etwa an einer Gürtellinie 7 stoßen das Faltverdeck 6 und der Grundkörper 5 zusammen, der Türen 8, einen Windschutzscheibenrahmen 9, einen Bug 10 sowie ein Heck 11 aufweist. Das Faltverdeck 6 ist zwischen einer einen Fahrgastraum 12 überspannenden Schließstellung Schst und einer in einem Aufnahmeraum 13 abgelegten Offenstellung Ost bewegbar. Der Aufnahmeraum 13 ist Bestandteil des Aufbaus 4 und mittels eines Deckels 14 verschließbar, der von einer Abdeckstellung Abst in eine Aufnahmestellung -nicht gezeigt- und vice versa betätigbar ist.

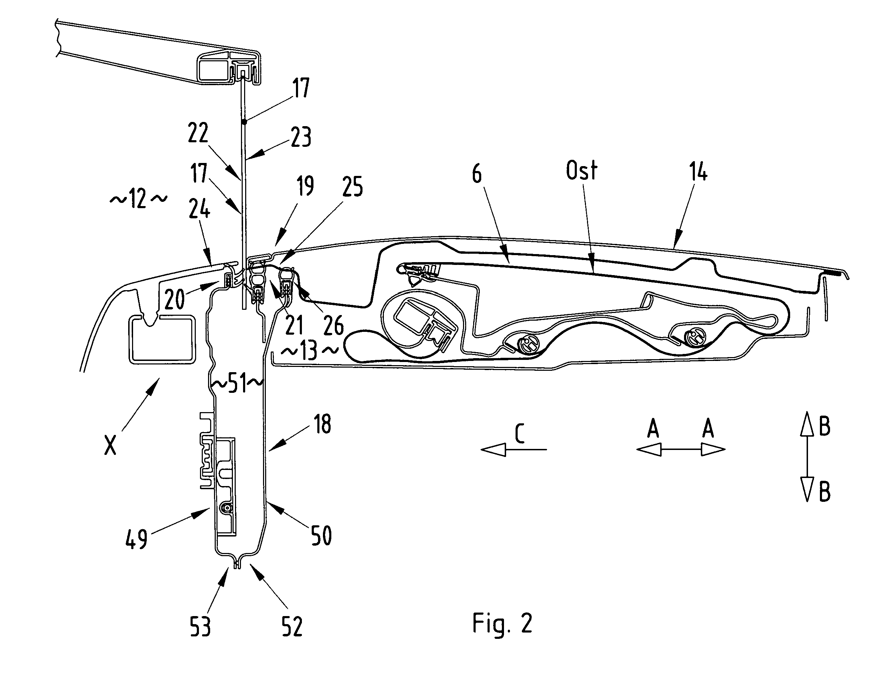

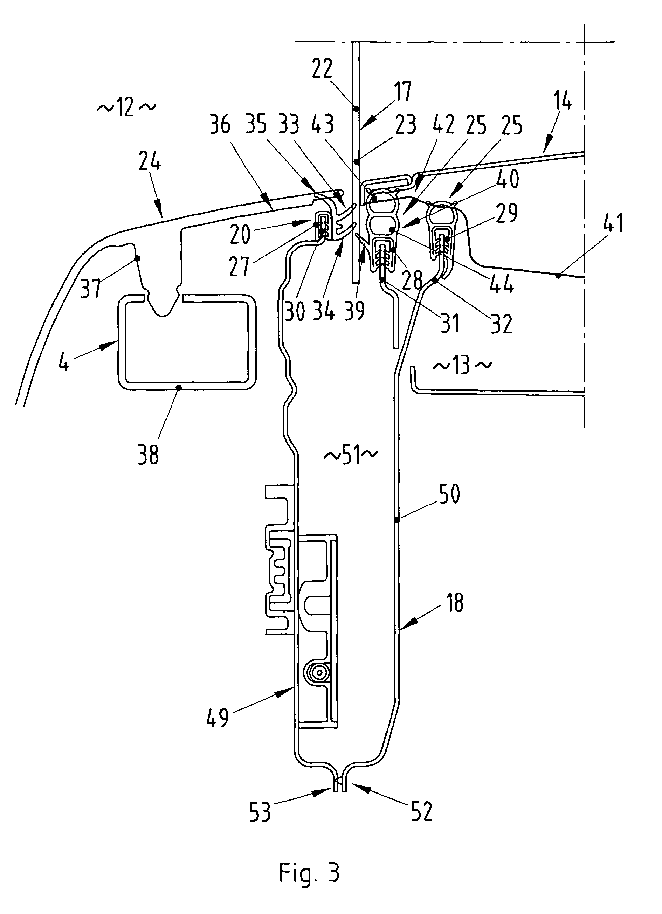

Das Faltverdeck 6 ist in einem rückwärtigen Bereich mit seitlichen Finnen 15 und 16 versehen, zwischen denen sich eine im Wesentlichen aufrecht stehende Heckscheibe 17 erstreckt, die quer zur Fahrzeuglängsrichtung A-A verläuft. Die Heckscheibe 17 ist in ein Heckscheibengehäuse 18 versenkbar und einerseits dem Fahrgastraum 12 und andererseits dem Deckel 14 für den Aufnahmeraum 13 des Aufbaus 4 zugekehrt -Fig. 2 und 3.

Das Heckscheibengehäuse 18 trägt -in Fahrzeughöhenrichtung B-B gesehen- in einem oberen Bereich 19 einen ersten Dichtkörper 20 und einem zweiten Dichtkörper 21, die mit einer Innenseite 22 und einer Außenseite 23 der Heckscheibe 17 zusammenwirken. Der erste Dichtkörper 20 stützt sich zusätzlich noch an einem winkelförmigen Querelement 24 im Fahrgastraum 12 ab. Und der zweite Dichtkörper 21 liegt an einer benachbart der Heckscheibe 17 verlaufenden Randzone 25 des Deckels 14 an. Mit relativ geringem Abstand zum zweiten Dichtkörper 21, d.h. in Fahrtrichtung C gesehen hinter dem zweiten Dichtkörper 21, erstreckt sich mit parallelem Abstand ein dritter Dichtkörper 26 der ebenfalls mit der Randzone 25 des Deckels 14 in Wirkverbindung steht.

Der erste Dichtkörper 20, der zweite Dichtkörper 21 und der dritte Dichtkörper 25 sind mit U-förmigen Halteabschnitten 27, 28 und 29 versehen, die einen ersten Stehflansch 30, einen zweiten Stehflansch 31 und einen dritten Stehflansch 32 in der Weise umgreifen, dass die Halteabschnitte 26, 27 und 28 und damit auch die zugehörigen Dichtkörper 21, 22 und 25 lagefest sind. Der erste Dichtkörper 20 stützt sich -in Fahrzeughöhenrichtung B-B gesehen- mit einer oberen Dichtlippe 33 und einer unteren Dichtlippe 34 an der Innenseite 22 der Heckscheibe 17 ab. Darüber hinaus liegt der erste Dichtkörper 20 mit einer oberhalb der oberen Dichtlippe 33 angeformten dritten Dichtlippe 35 an einer Innenseite 36 des Querelements 24 an, das die Funktion eines Innenverkleidungsteils ausübt und mittels eines Haltekörpers 37 an einem Querträger 38 des Aufbaus 4 befestigt ist.

Der zweite Dichtkörper 21 wirkt mit einer Dichtlippe 39 auf die Außenseite 23 der Heckscheibe 17 ein, wobei am zweiten Dichtkörper 22 eine erste Schlauchdichtungsvorrichtung 40 vorgesehen ist, die sich an einem Teil einer einen Innenrahmen 41 bildenden Innenseite 42 des Deckels 14 abstützt. Die erste Schlauchdichtungsvorrichtung 40 wird durch zwei übereinanderliegende obere und untere Schlauchdichtungsabschnitte 43 und 44 gebildet, welcher obere Schlauchdichtungsabschnitt 43 an der Innenseite 42 des Deckels 15 anliegt. Eine zweite Schlauchdichtungsvorrichtung 45, die mit der Innenseite 42 des Deckels 14 zusammenwirkt, ist an dem dritten Dichtkörper 26 vorgesehen.

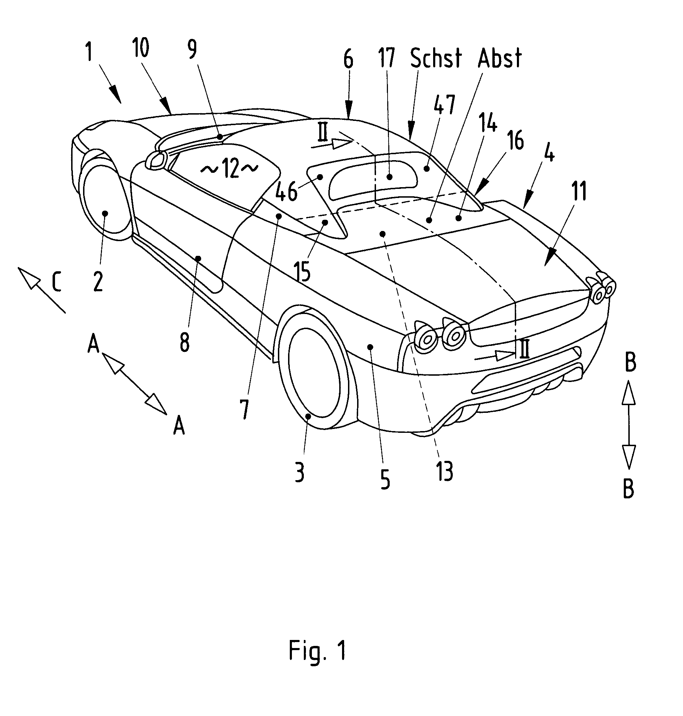

Benachbart von Längsseiten 46 und 47 -Fig. 1- der Heckscheibe 14 ist zumindest der erste Dichtkörper 20 mit Wasserführungselementen 48 versehen. Diese können baulich mit dem ersten Dichtkörper 20, gegebenenfalls auch dem zweiten Dichtkörper 21, vereinigt sein. Anders ausgedrückt, die Dichtkörper 20 und 21 sowie die Wasserführungselemente 48 können ein einziges Bauteil bilden.

Das Heckscheibengehäuse 18 besteht -in Fahrtrichtung C betrachtet- aus einer vorderen Schale 49 und einer hinteren Schale 50, die einen Raum 51 zur Bewegung der Heckscheibe 17 begrenzen. Die Schalen 49 und 50 sind -in Fahrzeughöhenrichtung B-B gesehen- in einem unteren Bereich 52 an einer Flanschverbindung 53 zusammengesetzt. Dabei ist im oberen Bereich 19 des Heckscheibengehäuses 18 an der vorderen Schale 49 der erste Stehflansch 30 angebracht. An der hinteren Schale 50 sind im besagten oberen Bereich 19 der zweite Stehflansch 31 und der dritte Stehflansch 32 angeformt. Schließlich ist im Ausführungsbeispiel der zweite Stehflansch 31 an einem trägerartigen Profilelement 54 angebracht, das mit einer aufrechten Wand 54 der hinteren Schale 50 verbunden ist. Allerdings ist auch denkbar, den dritten Stehflansch 32 an einem entsprechenden Profilelement vorzusehen.

## Patentansprüche

1. Heckscheibe für ein Faltverdeck eines Personenkraftwagens, das in einen Aufbau integriert ist und zwischen einer einen Fahrgastraum überspannenden Schließstellung und einer in einem Aufnahmeraum des Aufbaus abgelegten Offenstellung bewegbar ist, wobei die quer zur Fahrzeuglängsrichtung verlaufende, in ein Heckscheibengehäuse versenkbare Heckscheibe einerseits dem Fahrgastraum und andererseits einem rückwärtigen Deckel z.B. für den Aufnahmeraum zugekehrt ist, **dadurch gekennzeichnet, dass** das Heckscheibengehäuse (18) in einem -in Fahrzeughöhenrichtung gesehen- oberen Bereich (19) einen ersten Dichtkörper (20) und einen zweiten Dichtkörper (21) trägt, die mit einer Innenseite (22) und einer Außenseite (23) der Heckscheibe (17) zusammenwirken, welcher erste Dichtkörper (20) sich an einem Querelement (25) im Fahrgastraum (12) und der zweite Dichtkörper (21) sich an einer benachbart der Heckscheibe (17) erstreckenden Randzone (25) des Deckels (14) abstützen.

2. Heckscheibe nach Anspruch 1, **dadurch gekennzeichnet, dass** benachbart dem zweiten Dichtkörper (22) am Heckscheibengehäuse (18) ein dritter Dichtkörper (26) vorgesehen ist, der mit dem Deckel (14) zusammenarbeitet.

3. Heckscheibe nach den Ansprüchen 1 und 2, **dadurch gekennzeichnet, dass** der erste Dichtkörper (20), der zweite Dichtkörper (21) und der dritte Dichtkörper (22) mit U-förmigen Halteabschnitten (27, 28 und 29) erste, zweite und dritte Stehflansche (30, 31 und 33) des Heckscheibengehäuses (18) Lage haltend umgreifen.

4. Heckscheibe nach den Ansprüchen 1 bis 3, **dadurch gekennzeichnet, dass** der erste Dichtkörper (20) sich -in Fahrzeughöhenrichtung (B-B) gesehen- mit einer ersten oberen Dichtlippe (33) und einer zweiten unteren Dichtlippe (34) an der Heckscheibe (17) abstützt.

5. Heckscheibe nach einem oder mehreren der vorangehenden Ansprüche, **dadurch gekennzeichnet, dass** der erste Dichtkörper (20) sich mit einer oberhalb der oberen ersten Dichtlippe (33) angeordneten dritten Dichtlippe (35) an einer Innenseite (36) des Querelements (24) im Fahrgastraum (12) abstützt.

6. Heckscheibe nach den Ansprüchen 1 und 3, **dadurch gekennzeichnet, dass** der zweite Dichtkörper (21) mit einer Dichtlippe (39) auf die Außenseite (23) der Heckscheibe (17) dichtend einwirkt und mit einer ersten Schlauchdichtungsvorrichtung (40) sich an einer Innenseite (42) des Deckels (14) abstützt.

7. Heckscheibe nach Anspruch 6, **dadurch gekennzeichnet, dass** die erste Schlauchdichtungsvorrichtung (40) bspw. zwei übereinanderliegende Schlauchdichtungsabschnitte (43 und 44) umfasst, wovon der obere Schlauchdichtungsabschnitt (43) sich an der Innenseite (42) des Deckels (14) abstützt.

8. Heckscheibe nach den Ansprüchen 1 und 3, **dadurch gekennzeichnet, dass** der dritte Dichtkörper (26) über eine zweite Schlauchdichtungsvorrichtung (45) mit der Innenseite (42) des Deckels (14) zusammenarbeitet.

9. Heckscheibe nach einem oder mehreren der vorangehenden Ansprüche,**dadurch gekennzeichnet, dass** zumindest der erste Dichtkörper (26) benachbart von Längsseiten (46 und 47) der Heckscheibe (17) Wasserführelemente (48) aufweist.

10. Heckscheibe nach den Ansprüchen 1 und 3, **dadurch gekennzeichnet, dass** das Heckscheibengehäuse (18) -in Fahrtrichtung C betrachtet- aus einer vorderen Schale (49) und einer hinteren Schale (50) besteht, die zur Aufnahme der Heckscheibe (17) ausgebildet sind.

11. Heckscheibe nach Anspruch 10, **dadurch gekennzeichnet, dass** die vordere Schale (49) und die hintere Schale (50) des Heckscheibengehäuses (18) in einem -in Fahrzeughöhenrichtung (B-B) gesehen- unteren Bereich an einer Flanschverbindung (53) zusammengesetzt sind.

12. Heckscheibe nach den Ansprüchen 1, 3 und 10, **dadurch gekennzeichnet, dass** im oberen Bereich (19) des Heckscheibengehäuses (18) an der vorderen Schale (49) der erste Stehflansch (30) angeformt ist.

13. Heckscheibe nach den Ansprüchen 1, 3 und 10, **dadurch gekennzeichnet, dass** im oberen Bereich (19) des Heckscheibengehäuses (18) an der hinteren Schale (50) der zweite und der dritte Stehflansch (31 und 32) vorgesehen ist.

14. Heckscheibe nach Anspruch 13, **dadurch gekennzeichnet, dass** z.B. der zweite Stehflansch (31) an einem mit der hinteren Schale (50) verbundenen trägerartigen Profilelement (54) angebracht ist.
